# EUROPÄISCHE PATENTSCHRIFT

(11) **EP 2 110 344 B1**
(45) Veröffentlichungstag und Bekanntmachung des Hinweises auf die Patenterteilung: **01.08.2012**
(21) Anmeldenummer: 09008958.2
(22) Anmeldetag: 08.01.2007
(51) Int. Cl.: B65G 35/08, B65G 15/28

(54) **Fördervorrichtung mit Schubelement**
Transport device with push element
Dispositif de transport doté d'un élément de poussée

(30) Priorität: 13.01.2006 CH 56062006
(43) Veröffentlichungstag der Anmeldung: 21.10.2009
(62) Teilanmeldung aus: 07700107.1
(73) Patentinhaber: WRH Walter Reist Holding AG, 8272 Ermatingen (CH)
(72) Erfinder: Reist, Walter, 8340 Hinwil (CH)
(74) Vertreter: Frei Patent Attorneys

(56) Entgegenhaltungen:
- EP-A- 0 488 296
- DE-U1- 20 205 069
- US-A- 3 102 153

## Beschreibung

Die Erfindung bezieht sich auf das Gebiet der Fördertechnik und insbesondere auf eine Fördervorrichtung mit Schubelementen gemäss dem Oberbegriff des Patentanspruches 1.

### STAND DER TECHNIK

Bei bekannten Fördersystemen, welche Bänder oder Ketten von gleichartigen Elementen aufweisen, muss stets die Länge der Bänder oder Ketten an die Länge der Fördereinrichtung angepasst werden. Die Bänder oder Ketten müssen in die Fördereinrichtung eingefädelt werden und anschliessend zu einem umlaufenden Gebilde verbunden und gespannt werden. Bei bandähnlichen Fördereinrichtungen soll zudem eine möglichst ebene Oberfläche zur Aufnahme von zu fördernden Gegenständen gebildet werden. Ferner soll zum Bewegen der Einrichtung möglichst wenig Kraft aufzuwenden sein.

In der WO 2004/063059 A1 ist ein Fördersystem beschrieben, welches steife Lamellen mit dazwischen liegenden kompressiblen Elementen schiebend und ziehend fördert. Die kompressiblen Elemente sind in Förderrichtung vorgespannt, d.h. teilweise komprimiert, und können um Kurven geführt werden, ohne dass Lücken in der Förderfläche entstehen. Die Lamellen weisen seitlich hervorstehende Zähne auf, so dass sie durch korrespondierend geformte Zähne eines Antriebsmittels angetrieben werden können.

In der FR 143 262 wird ein schnell und einfach einsetzbares Transporthilfsmittel beschrieben, welches mehrere jeweils um eine Achse drehbare Walzenpaare aufweist. Die Achsen sind in der Mitte durch ein flexibles Band miteinander verbunden. An den Enden weisen die Achsen jeweils Räder mit einem grösseren Durchmesser als die Walzen auf. Das Transporthilfsmittel lässt sich in beliebigen Bahnen auslegen, wonach die Walzen als Rollbahn für Lasten dienen. Mittels der Räder kann das Transporthilfsmittel auch verschoben werden.

In der WO 2005/113 391 und der WO 2005/113392 werden keine Fördersysteme, sondern Wälzlager offenbart. In diesen liegen zur Aufnahme von hohen Lastkräften umlaufende Rollen vor. Diese Rollen laufen um einen ovalen Rollenkörper und sind durch mitlaufende Körper voneinander beabstandet. Die Rollen rollen wie bei einem üblichen Wälzlager einerseits auf dem Rollenkörper und andererseits an einem Gegenkörper ab, und nehmen so eine Lastkraft zwischen Rollenkörper und Gegenkörper auf.

Die EP 0 488 296 A1 offenbart eine Fördereinrichtung, in welcher einzelne Trägerelemente, welche nicht aneinander gehängt sind, durch eine Führung geschoben werden. Die Trägerelemente weisen an den beiden Enden jeweils Rollen auf, mit welchen sie in einer Führung abrollen. Die Trägerelemente sind zylindrisch geformt oder bilden, in einer anderen Ausführungsform, wenn sie gegeneinander geschoben sind, eine einigermassen ebene Fläche. In der letztgenannten Ausführungsform sind die Trägerelemente durch Distanzelemente voneinander beabstandet. Wenn die Trägerelemente um eine Kurve gefördert werden, reiben die Distanzelemente aneinander und erschweren so die Förderung.

Keine der bekannten Fördervorrichtungen weist die gewünschten Eigenschaften auf.

### DARSTELLUNG DER ERFINDUNG

Es ist Aufgabe der Erfindung, eine Fördervorrichtung mit Schubelementen der eingangs genannten Art zu schaffen, welche eine Übertragung hoher Kräfte erlaubt, und einfach, ohne besondere Anpassungsarbeiten, montiert werden kann. Eine weitere Aufgabe der Erfindung ist, eine Fördervorrichtung zu schaffen, die eine ebene und hoch belastbare Lastfläche ohne Lücken aufweist. Eine weitere Ausführungsform der Erfindung ist, eine Fördervorrichtung zu schaffen, welche als Getriebe zur Übertragung hoher Kräfte um Kurven herum verwendbar ist.

Diese Aufgabe löst eine Fördervorrichtung mit Schubelementen mit den Merkmalen des Patentanspruches 1.

In der Fördervorrichtung mit Schubelementen weist jedes der Schubelemente jeweils mindestens ein Rollenelement und mindestens einen Distanzierungskörper auf, wobei der mindestens eine Distanzierungskörper zur Beabstandung von Schubelementen, welche in der Fördervorrichtung aufeinander folgen, ausgebildet ist. Dabei erstrecken sich aufeinanderfolgende Schubelemente in Förderrichtung von einem ersten Ende zu einem zweiten Ende, und sind die Schubelemente im Bereich des ersten Endes durch das mindestens eine Rollenelement gegenüber einer Förderbahn beweglich gelagert. Im Bereich des zweiten Endes sind die die Schubelemente jeweils an einem anschliessenden Schubelement abgestützt. Es sind aufeinander folgende Schubelemente bezüglich einander nur auf Druck aber nicht auf Zug belastbar.

Die Schubelemente sind also nicht miteinander gekoppelt, und können nur Schubkräfte übertragen. Mit anderen Worten: die Schubelemente liegen lose gegeneinander und können sich, solange sie nicht gegeneinander gestossen werden, voneinander weg bewegen. Dies macht es möglich, die Schubelemente einzeln herzustellen und bereitzustellen. Beim Herstellen der Fördervorrichtung werden die Schubelemente einzeln in eine Förderbahn eingefüllt. Es ist nicht erforderlich, eine Länge eines Bandes oder einer Kette genau auf die Länge der Förderbahn abzustimmen. Es werden beispielsweise gerade so viele Schubelemente wie möglich eingefüllt. Dabei wird, wenn alle anderen Schubelemente gegeneinander geschoben sind, im Normalfall noch eine Lücke zwischen zwei Schubelementen verbleiben. Beim Antreiben der Folge von Schubelementen werden diese zusammengeschoben, und nur gerade vor einem Antrieb kann eine solche Lücke entstehen. Die Fördervorrichtung kann so ausgelegt werden, dass diese Lücke in einem Bereich liegt, wo sie nicht stört.

Die Schubelemente weisen Rollenelemente auf, was die notwendige Kraft zum Antreiben einer Folge von Schubelementen verringert. Ein Schubelement ist nicht an beiden Enden durch beispielsweise Rollen, welche ja Teil des Schubelementes sind, direkt gegenüber der Förderbahn gelagert, sondern nur an einem Ende. Am anderen Ende ist das Schubelement indirekt über ein benachbartes (vorangehendes oder nachfolgendes) Schubelement gegenüber der Förderbahn gelagert. Dadurch, dass die Schubelemente nur an einem Ende gelagert sind, wobei die Schubelemente sich gegenseitig stützen, wird der Rollwiderstand im Vergleich zu mehrachsigen Ausführungen klein gehalten. Der Antrieb kann an den Rollenelementen und/oder an den Distanzierungskörpern und/oder an Trägerelementen der Schubelemente angreifen. Dazu sind diese in bevorzugten Ausführungsfonnen der Erfindung mit Nocken oder Mitnehmern ausgebildet.

In einer bevorzugten Ausführungsform der Erfindung sind das oder die Rollenelemente bezüglich des mindestens einen Distanzierungskörpers um genau eine gemeinsame geometrische Achse drehbar. Das heisst also, dass zwei oder mehr Rollen, die am ersten Ende des Schubelementes gelagert sind, koaxial zueinander sind. Eine "gemeinsame geometrische Achse" bedeutet in anderen Worten, dass die Rollenelemente um dieselbe Drehachse im geometrischen Sinne drehbar sind. Diese Drehachse kann durch separate physische Achselemente, die miteinander fluchten gebildet sein, oder aber durch eine gemeinsame physische Achse oder eine gemeinsame Welle. Jedes der Schubelemente weist also nur eine Achse auf, um welche sich seine Rollenelemente drehen, und umgekehrt ist also auch das Schubelement um diese Achse bezüglich der Rollenelemente drehbar.

In einer anderen bevorzugten Ausführungsform der Erfindung weisen die Rollenelemente mehr als eine geometrische Achse auf: Vorzugsweise sind jeweils zwei Rollen mit parallelen Achsen am ersten Ende eines Schubelementes angeordnet und sind in der Richtung senkrecht zu der Achsrichtung voneinander beabstandet. Die beiden Rollen drehen sich dabei vorzugsweise im wesentlichen in derselben Ebene. Die Rollen laufen in einer Förderbahn, welche die Schubelemente mit den Rollen umschliesst und am ersten Ende rollend abstützt. Auch hier sind die Schubelemente am zweiten Ende jeweils formschlüssig gegen ein erstes Ende eines benachbarten Schubelementes gestossen. Zwischen dem ersten und dem zweiten Ende weisen die Schubelemente Abstützbereiche auf, welche beim normalen Abrollen fast, aber nicht ganz bis zur Förderbahn reichen. Im Zustand, in welchem die Schubelemente voneinander weg bewegt sind, drehen sich die Schubelemente leicht ab, bis sie durch die Abstützbereiche gleitend an der Förderbahn abgestützt sind. Da die Schubelemente nur beschränkt weggedreht sind, werden sie beim erneuten Aneinanderstossen durch das jeweils benachbarte Schubelement wieder in die korrekte Lage geschoben.

Dasselbe gilt für die Ausführungsformen mit nur einer geometrischen Achse der Rollen: Wenn zwischen zwei Schubelementen, die nicht gegeneinander gestossen werden eine Lücke entsteht, so wird sich das Schubelement aufgrund der Schwerkraft oder aufgrund anderer Kräfte um diese Achse drehen. Wenn die Schubelemente wieder gegeneinander gestossen werden, müssen die Schubelemente wieder in die korrekte gegenseitige Lage gelangen. Zu diesem Zweck weist die Förderbahn Führungsmittel zum losen Führen der Distanzierungskörper auf. Diese Führungsmittel verhindern, dass sich die Schubelemente oder auch nur die Distanzierungskörper zu weit aus der korrekten Position weg drehen.

In einer bevorzugten Ausführungsform der Erfindung weisen die Distanzierungskörper Schubübertragungsflächen auf, welche als Segment einer Zylinderfläche oder Kugelfläche geformt sind, wobei die Zylinderachse mit der Achse zusammenfällt, respektive der Kugelmittelpunkt auf der Achse des jeweiligen Schubelementes liegt. Dies erlaubt, wenn sich die Schubelemente um eine Kurve der Förderbahn bewegen, eine gegenseitige Verdrehung der Distanzierungskörper ohne Änderung des Abstandes zwischen den Achsen der Schubelemente.

In einer weiteren bevorzugten Ausführungsform der Erfindung weisen die Schubelemente jeweils ein Trägerelement zum Fördern von Gegenständen auf. Damit kann eine Fördervorrichtung zum Fördern von Gegenständen erstellt werden, wobei die Gegenstände beispielsweise auf eine flache Oberfläche der Trägerelemente gelegt werden.

In einer weiteren bevorzugten Ausführungsform der Erfindung sind die Trägerelemente von aufeinanderfolgenden Schubelementen korrespondierend zueinander geformt und bewegen sich beim Bewegen der Schubelemente um eine Kurve die Trägerelemente gleitend zueinander, wobei Lastflächen der Trägerelemente gemeinsam eine Oberfläche zum Fördern von Gegenständen bilden. Eine solche Förderfläche ist ähnlich einem Förderband, aber mit viel höherer Belastbarkeit, ohne Durchhängen und ohne dass Stützrollen durch das Band spürbar werden.

In anderen bevorzugten Ausführungsformen der Erfindung weisen die Trägerelemente Mittel zum zeitweisen Festhalten von Gegenständen auf, beispielsweise Greifer.

In einer weiteren bevorzugten Ausfiihrungsform der Erfindung werden die Schubelemente durch ein Antriebsrad angetrieben und treiben selber wiederum ein Abtriebsrad an. Zwischen diesen Rädern kann eine Förderbahn der Schubelemente einen im wesentlichen beliebigen Verlauf aufweisen. Es kann so also ein Getriebe zur Übertragung hoher Kräfte mit einer freien Wahl der Lage der Achsen von Antrieb und Abtrieb realisiert werden.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausfiihrungsbeispielen, welche in den beiliegenden Zeichnungen dargestellt sind, näher erläutert. Es zeigen jeweils schematisch:
- Figur 1 - 3: verschiedene Ansichten eines Schubelements gemäss einer ersten Ausführungsform der Erfindung;
- Figur 4: eine Folge von Schubelementen der Figuren 1 - 3 in einer Fördervorrichtung;
- Figur 5: das Ineinandergreifen von Antrieb und Rollen in dieser Fördervorrichtung; und
- Figur 6: einen Querschnitt durch diese Fördervorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

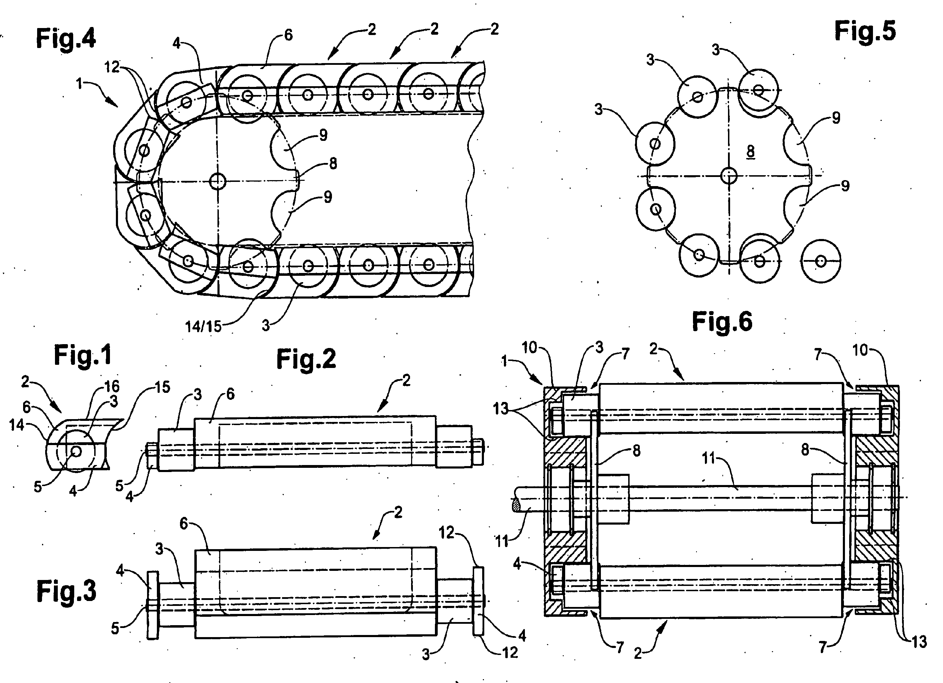

**Figuren 1 - 3** zeigen verschiedene Ansichten eines Schubelements 2 gemäss einer ersten Ausführungsform der Erfindung. Das Schubelement 2 weist ein Trägerelement 6 auf, zwei Rollen 3 und zwei Distanzierungskörper 4. In Förderrichtung betrachtet ist das Trägerelement 6 in der Mitte des Schubelementes 2 angeordnet, und sind links und rechts vom Trägerelement 6 je eine Rolle 3 und ein Distanzierungskörper 4 um eine Achse 5 drehbar angeordnet. Die Rollen 3 sind um die Achse 5 vollständig und kontinuierlich drehbar. Die Distanzierungskörper 4 sind um die Achse 5 mindestens soweit drehbar, dass die Distanzierungskörper 4 beim Umfahren eines Umlenkrades oder Antriebsrades 8 miteinander in Kontakt bleiben. Diese Ausführungsform ist vor allem aber nicht ausschliesslich für Bahnen geeignet, deren Krümmungsachsen parallel zu den Achsen 5 verlaufen.

Die Distanzierungskörper 4 sind länglich, erstrecken sich in Förderrichtung und weisen Schubübertragungsflächen 12 auf, welche als Segment einer Zylinderfläche geformt sind, wobei die Zylinderachse mit der Achse 5 zusammenfällt. Das Trägerelement 6 weist eine erste Kontaktfläche 14 auf, die als Segment einer Zylinderfläche geformt ist, wobei die Zylinderachse ebenfalls mit der Achse 5 zusammenfällt. Der Zylinderradius bei den Schubübertragungsflächen 12 ist leicht grösser als bei der ersten Kontaktfläche 14. Ferner weist das Trägerelement 6 eine zweite Kontaktfläche 15 auf, die der ersten Kontaktfläche 14 bezüglich der Achse 5 gegenüber liegt und als Negativ der ersten Kontaktfläche 14 geformt ist.

Die Kraft zwischen den Schubelementen 2 wird also über die leicht grösseren Distanzierungskörper 4 übertragen. Aufeinanderfolgende Trägerelemente 6 berühren sich leicht an den korrespondierend (positiv/negativ) geformten Zylinderflächen und stützen sich gegenseitig ab, solange die Schubelemente 2 gegeneinander gestossen werden. Die Lastflächen 16 nehmen eine Last von geförderten Gegenständen auf und leiten sie über die Achse 5 und die Rollen 3 auf den Führungskörper 10. Antriebskräfte und Lastkräfte werden also über getrennte Elemente übertragen.

**Figur 4** zeigt eine Folge von Schubelementen 2 der **Figuren 1 - 3** in einer Fördervorrichtung 1. Die Schubelemente 2 sind über ein Umlenkrad geführt, welches auch als Antriebsrad 8 oder Abtriebsrad wirken kann. Die Achse des Antriebsrades 8 verläuft hier parallel zu den Achsen 5 der Schubelemente 2. Bei der Umlenkung über das Antriebsrad 8 drehen sich die Distanzierungskörper 4 um die Achsen 5 gegeneinander und rollen mit den Schubübertragungsflächen 12 aneinander ab, wobei der Abstand zwischen den Achsen 5 gleich bleibt. Ferner gleiten auch die Trägerelemente 6 an ihren Kontaktflächen 14, 15 gegeneinander, so dass kein Spalt zwischen den Trägerelementen 6 auftritt.

**Figur 5** zeigt das Ineinandergreifen von Antrieb 8 und Rollen 3 in dieser Ausführungsform. Die Grösse der Distanzierungskörper 4 und Trägerelemente 6 und der Abstand von Ausnehmungen 9 im Antriebsrad 8 sind aufeinander abgestimmt, dass die Rollen 3 jeweils in die passend geformten Ausnehmungen 9 zu liegen kommen. Durch die in den Ausnehmungen 9 liegenden Rollen 3 werden die Schubelemente 2 weiter und durch die Fördervorrichtung 1 geschoben.

**Figur 6** zeigt einen Querschnitt durch diese Fördervorrichtung 1. Zusätzlich zu den bereits erwähnten Elementen ist hier noch eine Förderbahn 7 als umlaufende Nut im Führungskörper 10 zu sehen, in welcher Förderbahn 7 die Rollen 3 verlaufen. Die Distanzierungskörper 4 sind zwischen Führungsflächen 13 in der Förderbahn 7 geführt, welche die Verdrehung der Distanzierungskörper 4 bezüglich der Achsen 5 begrenzen. Es ist auch sichtbar, dass das Antriebsrad 8 zwei parallele Schieben aufweist, welche an den Rollen 3 an beiden Seiten der Schubelemente 2 eingreifen.

In einer weiteren Ausführungsform der Erfindung sind die erste Kontaktfläche 14 und die zweite Kontaktfläche 15 in zwei Richtungen gekrümmt. Beispielsweise bilden sie jeweils einen Ausschnitt aus einer Kugelfläche, oder einer Oberfläche eines Torus oder eines räumlichen Ellipsoids. Damit können sich die Trägerelemente 6 um zwei Achsen gegeneinander verdrehen. Je nachdem, um welche Achse oder Achsen die gegenseitige Verdrehung stattfindet, ist die eine oder andere Form zu wählen. Dabei kann nicht immer ein dauernder perfekter Formschluss der beiden Flächen gewährleistet werden, sondern unter Umständen nur für kleine Bewegungen ein ausreichend genauer Formschluss. Dabei ist insbesondere bei den Übergängen zwischen aufeinanderfolgenden Lastflächen 16 ein möglichst glatter Übergang ohne Spalt zu gewährleisten.

In weiteren Ausführungsformen der Erfindung weist ein Schubelement 2 mehr als zwei Rollen 3 auf, und/oder unterteilte Trägerelemente 6. Beispielsweise kann in der Ausführungsform der **Figur 2** in der Mitte der Achse 5 noch eine weitere Rolle angeordnet sein, um höhere Kräfte aufzunehmen. Das Trägerelement 6 kann auch aus mehreren einzelnen Teilen bestehen. Diese bilden in Ihrer Gesamtheit eine unterbrochene oder mehrteilige erste Kontaktfläche 14, zweite Kontaktfläche 15 und Lastfläche 16. Es ist zur Aufnahme höherer Lastkräfte auch möglich, mehrere Bahnen gemäss der **Figur 6** nebeneinander anzuordnen.

### BEZUGSZEICHENLISTE

- 1: Fördervorrichtung
- 2: Schubelement
- 3: Rolle
- 4: Distanzierungskörper
- 5: Achse
- 6: Trägerelement
- 7: Förderbahn
- 8: Antriebsrad
- 9: Ausnehmung
- 10: Führungskörper
- 11 1: Antriebswelle
- 12: Schubübertragungsfläche
- 13: Führungsfläche
- 14: erste Kontaktfläche
- 15: zweite Kontaktfläche
- 16: Lastfläche

## Patentansprüche

1. Fördervorrichtung (1) zum Fördern von einzelnen Schubelementen (2), **dadurch gekennzeichnet, dass** jedes der Schubelemente (2) jeweils mindestens ein Rollenelement (3) und mindestens einen Distanzierungskörper (4) aufweist, wobei der mindestens eine Distanzierungskörper (4) zur Beabstandung von Schubelementen (2), welche in der Fördervorrichtung (1) aufeinander folgen, ausgebildet ist, und wobei sich aufeinanderfolgende Schubelemente (2) in Förderrichtung von einem ersten Ende zu einem zweiten Ende erstrecken, und die Schubelemente (2) im Bereich des ersten Endes durch das mindestens eine Rollenelement (3) gegenüber einer Förderbahn (7) beweglich gelagert sind, und die Schubelemente (2) im Bereich des zweiten Endes an einem anschliessenden Schubelement (2) abgestützt sind, und dass aufeinander folgende Schubelemente (2) bezüglich einander nur auf Druck aber nicht auf Zug belastbar sind, und in welchem die Schubelemente (2) jeweils ein Trägerelement (6) zum Fördern von Gegenständen aufweisen und die Trägerelemente (6) von aufeinanderfolgenden Schubelementen (2) korrespondierend einander geformt sind und sich beim Bewegen der Schubelemente (2) um eine Kurve die Trägerelemente (6) zueinander bewegen, wobei Lastflächen (16) der Trägerelemente (6) gemeinsam eine Oberfläche zum Fördern von Gegenständen bilden, und die Distanzierungskörper (4) eines Schubelementes (2) Schubübertragungsflächen (12) aufweisen, welche als Segment einer gemeinsamen Zylinderfläche geformt sind, wobei die Zylinderachse mit einer Achse (5) zusammenfällt und bei einer Umlenkung der Schubelemente (2) sich die Distanzierungskörper (4) um die Achse (5) gegeneinander drehen und mit den Schubübertragungsflächen (12) aneinander abrollen.

2. Fördervorrichtung (1) gemäss Anspruch 1, **dadurch gekennzeichnet, dass** die Distanzierungskörper (4) nicht über die Lastflächen (16) hinausragen.

3. Fördervorrichtung (1) gemäss Anspruch 1 oder 2, **dadurch gekennzeichnet, dass** die Distanzierungskörper (4) um eine Achse (5) drehbar sind und zwischen Führungsflächen (13) in der Förderbahn (7) geführt sind, wobei die Führungsflächen (13) eine Verdrehung der Distanzierungskörper (4) bezüglich der Achsen (5) begrenzen.

4. Fördervorrichtung (1) gemäss Anspruch 1 oder 2 oder 3, **dadurch gekennzeichnet, dass** das Trägerelement (6) eine erste Kontaktfläche (14) aufweist, die als Segment einer Zylinderfläche oder Kugelfläche geformt ist, wobei die Zylinderachse mit der Achse (5) zusammenfällt, respektive der Kugelmittelpunkt auf der Achse (5) liegt, und das Trägerelement (6) eine zweite Kontaktfläche (15) aufweist, die der ersten Kontaktfläche (14) bezüglich der Achse (5) gegenüber liegt und als Negativ der ersten Kontaktfläche (14) geformt ist.

5. Fördervorrichtung (1) gemäss Anspruch 4, wobei die erste Kontaktfläche (14) des Trägerelementes (6) und die Schubübertragungsflächen (12) auf mindestens einer Seite der Distanzierungskörper (4) zylindrisch geformt sind und dieselbe Zylinderachse aufweisen, wobei der Zylinderradius bei den Schubübertragungsflächen (12) leicht grösser als bei der ersten Kontaktfläche (14) ist.

6. Fördervorrichtung (1) gemäss einem der Ansprüche 1 bis 5, **dadurch gekennzeichnet, dass** in Förderrichtung betrachtet das Trägerelement (6) in der Mitte des Schubelementes (2) angeordnet ist, und links und rechts vom Trägerelement (6) je eine Rolle (3) und ein Distanzierungskörper (4) um die Achse (5) drehbar angeordnet sind.

7. Fördervorrichtung (1) gemäss einem der Ansprüche 1 bis 6, aufweisend ein Antriebsmittel (8), welches zum Fördern der Schubelemente (2) ausgebildet ist und die Schubelemente (2) entlang einer Förderbahn (7) schiebt, und wobei das Antriebsmittel (8) an den Rollenemelementen (3) der Schubelemente (2) angreift.

8. Fördervorrichtung (1) gemäss einem der Ansprüche 1 bis 7, **dadurch gekennzeichnet, dass** die Förderbahn (7) Führungsmittel (13) zum losen Führen der Distanzierungskörper (4) aufweist, so dass bei Schubelementen (2), die sich voneinander wegbewegt haben, beim erneuten gegeneinander Bewegen die Distanzierungskörper (4) in die korrekte Position zur Schubübertragung gelangen, und in dieser Position aufeinander abgestützt sind.

9. Fördervorrichtung (1) gemäss einem der Ansprüche 1 bis 8, **dadurch gekennzeichnet, dass** das oder die Rollenelemente (3) bezüglich des mindestens einen Distanzierungskörpers (4) um genau eine gemeinsame geometrische Achse (5) drehbar sind.

10. Fördervorrichtung (1) gemäss einem der Ansprüche 1 bis 9, **dadurch gekennzeichnet, dass** die Distanzierungskörper (4) Schubübertragungsflächen (12) aufweisen, welche als Segment einer Zylinderfläche oder Kugelfläche geformt sind, wobei die Zylinderachse mit der Achse (5) zusammenfällt, respektive der Kugelmittelpunkt auf der Achse (5) liegt.

11. Fördervorrichtung (1) gemäss einem der Ansprüche 1 bis 10, **dadurch gekennzeichnet, dass** die Distanzierungskörper (4) länglich sind und sich in Förderrichtung erstrecken.

12. Schubelement (2), zur Verwendung in der Fördervorrichtung (1) gemäss einem der bisherigen Ansprüche, wobei das Schubelement (2) jeweils mindestens ein Rollenelement (3) und mindestens einen Distanzierungskörper (4) aufweist, wobei der mindestens eine Distanzierungskörper (4) zur Beabstandung von Schubelementen (2), welche in der Fördervorrichtung (1) aufeinander folgen, ausgebildet ist, und wobei sich aufeinanderfolgende Schubelemente (2) in Förderrichtung von einem ersten Ende zu einem zweiten Ende erstrecken, und die Schubelemente (2) im Bereich des ersten Endes durch das mindestens eine Rollenelement (3) gegenüber einer Förderbahn (7) beweglich lagerbar sind, und die Schubelemente (2) im Bereich des zweiten Endes an einem anschliessenden Schubelement (2) abstützbar sind, und dass aufeinander folgende Schubelemente (2) bezüglich einander nur auf Druck aber nicht auf Zug belastbar sind, und ein Schubelement (2) jeweils ein Trägerelement (6) zum Fördern von Gegenständen aufweist und die Trägerelemente (6) von aufeinanderfolgenden Schubelementen (2) korrespondierend zueinander geformt sind und beim Bewegen der Schubelemente (2) um eine Kurve die Trägerelemente (6) zueinander bewegbar sind, wobei Lastflächen (16) der Trägerelemente (6) gemeinsam eine Oberfläche zum Fördern von Gegenständen bilden, und die Distanzierungskörper (4) eines Schubelementes (2) Schubübertragungsflächen (12) aufweisen, welche als Segment einer gemeinsamen Zylinderfläche geformt sind, wobei die Zylinderachse mit einer Achse (5) zusammenfällt und bei einer Umlenkung der Schubelemente (2) sich die Distanzierungskörper (4) um die Achse (5) gegeneinander drehen und mit den Schubübertragungsflächen (12) aneinander abrollen.

## Claims

1. A conveying device (1) for conveying individual push elements (2), **characterised in that** each of the push elements (2) in each case comprises at least one roller element (3) and at least one spacer body (4), wherein the at least one spacer body (4) is designed for distancing push elements (2), which follow one another in the conveying device (1) and wherein successive push elements (2) in the conveying direction extend from a first end to a second end, and the push elements (2) in the region of the first end are movably mounted with respect to a conveying track (7) by way of the at least one roller element (3), and the push elements (2) in the region of the second end are supported on an adjacent push element (2), and that successive push elements (2) with respect to one another are only loadable in compression, but not tension, and in which the push elements (2) in each case comprise a carrier element (6) for conveying objects, and the carrier elements (6) of successive push elements (2) are shaped corresponding to one another and the carrier elements (6) move towards one another on moving the push elements (2) around a curve, wherein load surfaces (16) of the carrier elements (6) together form a surface for conveying objects, and the spacer bodies (4) of a push element (2) comprise push transmitting surfaces (12), which are shaped as a segment of a common cylinder surface, wherein the cylinder axis coincides with an axis (5) and with a deflection of the push elements (2), the spacer bodies (4) rotate to one another about the axis (5) and roll on one another with the push transmitting surfaces (12).

2. A conveying device according to claim 1, **characterised in that** the spacer bodies (4) do not project beyond the load surfaces (16).

3. A conveying device (1) according to claim 1 or 2, **characterised in that** the spacer bodies (4) are rotatable about an axis (5) and are guided between guide surfaces (13) in the conveying track (7), wherein the guide surfaces (13) limit a rotation of the spacer bodies (4) with respect to the axes (5).

4. A conveying device according to claim 1 or 2 or 3, **characterised in that** the carrier element (6) comprises a first contact surface (14) which is shaped as a segment of a cylinder surface or ball surface, wherein the cylinder axis coincides with the axis (5) or the ball middle point lies on the axis (5), and the carrier element (6) comprises a second contact surface (15) which lies opposite the first contact surface (14) with respect to the axis (5) and is shaped as a negative of the first contact surface (14).

5. A conveying device (1) according to claim 4, wherein the first contact surface (14) of the carrier element (6) and the push transmitting surfaces (12) on at least one side of the spacer bodies (4) are cylindrically shaped and have the same cylinder axis, wherein the cylinder radius at the push transmitting surfaces (12) is slightly larger than at the first contact surface (14).

6. A conveying device (1) according to one of claims 1 to 5, **characterised in that** seen in the conveying direction, the carrier element (6) is arranged in the middle of the push element (2) and in each case a roller (3) and a spacer body (4) are rotatably arranged about the axis (5), on the left and right of the carrier element (6).

7. A conveying device (1) according to one of the claims 1 to 6, comprising a drive means (8) which is designed for conveying the push elements (2) and pushes the push elements (2) along a conveying track (7), and wherein the drive means (8) engages on the roller elements (3) of the push elements (2).

8. A conveying device (1) according to one of the claims 1 to 7, **characterised in that** the conveying track (7) comprises guide means (13) for the loose guiding of the spacer bodies (4), so that with push elements (2) which have moved away from one another, with a renewed movement to one another, the spacer bodies (4) get into the correct position for push transmission and are supported on one another in this position.

9. A conveying device (1) according to one of the claims 1 to 8, **characterised in that** the roller element or elements (3) with respect to the at least one spacer body (4) are rotatable about exactly one common geometric axis (5).

10. A conveying device (1) according to one of the claims 1 to 9, **characterised in that** the spacer bodies (4) comprise push transmitting surfaces (12) which are shaped as a segment of a cylinder surface or ball surface, wherein the cylinder axis coincides with the axis (5) or the ball middle point lies on the axis (5).

11. A conveying device (1) according to one of the claims 1 to 10, **characterised in that** the spacer bodies (2) are elongate and extend in the conveying direction.

12. A push element (2) for use in the conveying device (1) according to one of the preceding claims, wherein the push element (2) in each case comprises at least one roller element (3) and at least one spacer body (4), wherein the at least one spacer body (4) is designed for distancing push elements (2), which follow one another in the conveying device (1) and wherein successive push elements (2) in the conveying direction extend from a first end to a second end, and the push elements (2) in the region of the first end are movably mountable with respect to a conveying track (7) by way of the at least one roller element (3), and the push elements (2) in the region of the second end are supportable on an adjacent push element (2), and that successive push elements (2) with respect to one another are only loadable in compression, but not tension, and a push element (2) in each case comprises a carrier element (6) for conveying objects, and the carrier elements (6) of successive push elements (2) are shaped corresponding to one another and the carrier elements (6) are movable towards one another on moving the push elements (2) around a curve, wherein load surfaces (16) of the carrier elements (6) together form a surface for conveying objects, and the spacer bodies (4) of a push element (2) comprise push transmitting surfaces (12), which are shaped as a segment of a common cylinder surface, wherein the cylinder axis coincides with an axis (5) and with a deflection of the push elements (2), the spacer bodies (4) rotate to one another about the axis (5) and roll on one another with the push transmitting surfaces (12).

## Revendications

1. Dispositif de transport (1) destiné à transporter des éléments poussoirs individuels (2),
**caractérisé en ce que**
chacun des éléments poussoirs (2) présente au moins un élément de roulement (3) et au moins un corps d'écartement (4),
**en ce que** le ou les corps d'écartement (4) sont configurés pour maintenir à distance mutuelle les éléments poussoirs (2) qui se suivent dans le dispositif de transport (1),
**en ce que** les éléments poussoirs successifs (2) s'étendent dans la direction du transport depuis une première extrémité jusqu'à une deuxième extrémité et les éléments poussoirs (2) sont au niveau de leur première extrémité montés à déplacement par rapport à une piste de transport (7) par le ou les éléments de roulement (3),
**en ce que** les éléments poussoirs (2) s'appuient au niveau de leur deuxième extrémité sur un élément poussoir (2) adjacent,
**en ce que** des éléments poussoirs successifs (2) peuvent être sollicités mutuellement uniquement en poussée et non en traction,
**en ce que** les éléments poussoirs (2) présentent tous un élément de support (6) destiné à transporter des objets, les éléments de support (6) d'éléments poussoirs (2) successifs ayant des configurations mutuellement correspondantes et les éléments de support (6) se déplaçant les uns par rapport aux autres lorsque les éléments poussoirs (2) se déplacent suivant une courbe,
**en ce que** des surfaces de charge (16) des éléments de support (6) forment ensemble une surface de transport d'objets,
**en ce que** les corps d'écartement (4) d'un élément poussoir (2) présentent des surfaces (12) de transfert de poussée qui sont configurées en segments d'une surface cylindrique commune et
**en ce que** l'axe du cylindre coïncide avec un axe (5) et les corps d'écartement (4) tournent les uns par rapport aux autres autour de l'axe (5) lors d'un changement de direction des éléments poussoirs (2) et roulent les uns contre les autres par les surfaces (12) de transfert de poussée.

2. Dispositif de transport (1) selon la revendication 1, **caractérisé en ce que** les corps d'écartement (4) ne débordent pas au-delà des surfaces de charge (16).

3. Dispositif de transport (1) selon les revendications 1 ou 2, **caractérisé en ce que** les corps d'écartement (4) peuvent tourner autour d'un axe (5) et sont guidés dans la piste de transport (7) entre des surfaces de guidage (13), les surfaces de guidage (13) délimitant la rotation des corps d'écartement (4) par rapport aux axes (5).

4. Dispositif de transport (1) selon les revendications 1, 2 ou 3, **caractérisé en ce que** l'élément de support (6) présente une première surface de contact (14) configurée en segment de surface cylindrique ou de surface sphérique, l'axe du cylindre coïncidant avec l'axe (5) ou le centre de la sphère étant situé sur l'axe (5), l'élément de support (6) présentant une deuxième surface de contact (15) symétrique de la première surface de contact (14) par rapport à l'axe (5) et configurée en négatif de la première surface de contact (14).

5. Dispositif de transport (1) selon la revendication 4, dans lequel la première surface de contact (14) de l'élément de support (6) et les surfaces (12) de transfert de poussée ont une forme cylindrique sur au moins un côté des corps d'écartement (4) et présentent le même axe de cylindre, le rayon du cylindre des surfaces (12) de transfert de poussée étant légèrement plus grand que celui de la première surface de contact (14).

6. Dispositif de transport (1) selon l'une des revendications 1 à 5, **caractérisé en ce que** vu dans la direction du transport, l'élément de support (6) est disposé au milieu de l'élément poussoir (2), un rouleau (3) et un corps d'écartement (4) étant disposés à rotation autour de l'axe (5) respectivement à gauche et à droite de l'élément de support (6).

7. Dispositif de transport (1) selon l'une des revendications 1 à 6, présentant un moyen d'entraînement (8) configuré pour transporter les éléments poussoirs (2) et poussant les éléments poussoirs (2) suivant une piste de transport (7), le moyen d'entraînement (8) engageant les éléments de roulement (3) des éléments poussoirs (2).

8. Dispositif de transport (1) selon l'une des revendications 1 à 7, **caractérisé en ce que** la piste de transport (7) présente des moyens de guidage (13) qui guident lâchement les corps d'écartement (4) de telle sorte que lorsque des éléments poussoirs (2) qui se sont écartés les uns des autres se déplacent de nouveau les uns par rapport aux autres, les corps d'écartement (4) sont amenés dans la position correcte de transfert de poussée et s'appuient les uns sur les autres dans cette position.

9. Dispositif de transport (1) selon l'une des revendications 1 à 8, **caractérisé en ce que** le ou les éléments de roulement (3) peuvent tourner autour d'un seul axe géométrique commun (5) par rapport au corps ou aux corps d'écartement (4).

10. Dispositif de transport (1) selon l'une des revendications 1 à 9, **caractérisé en ce que** les corps d'écartement (4) présentent des surfaces (12) de transfert de poussée configurées en segments d'une surface cylindrique ou d'une surface sphérique, l'axe du cylindre coïncidant avec l'axe (5) ou le centre de la sphère étant situé sur l'axe (5).

11. Dispositif de transport (1) selon l'une des revendications 1 à 10, **caractérisé en ce que** les corps d'écartement (4) sont allongés et s'étendent dans la direction du transport.

12. Elément poussoir (2) destiné à être utilisé dans le dispositif de transport (1) selon l'une des revendications précédentes, dans lequel :
chaque élément poussoir (2) présente au moins un élément de roulement (3) et au moins un corps d'écartement (4),
le ou les corps d'écartement (4) sont configurés pour maintenir à distance mutuelle les éléments poussoirs (2) qui se suivent dans le dispositif de transport (1),
les éléments poussoirs successifs (2) s'étendent dans la direction du transport depuis une première extrémité jusqu'à une deuxième extrémité et les éléments poussoirs (2) sont au niveau de leur première extrémité montés à déplacement par rapport à une piste de transport (7) par le ou les éléments de roulement (3),
les éléments poussoirs (2) peuvent s'appuyer au niveau de leur deuxième extrémité sur un élément poussoir (2) adjacent,
des éléments poussoirs successifs (2) peuvent être sollicités mutuellement uniquement en poussée et non en traction,
chaque élément poussoir (2) présente un élément de support (6) destiné à transporter des objets, les éléments de support (6) d'éléments poussoirs (2) successifs ayant des configurations mutuellement correspondantes et les éléments de support (6) se déplaçant les uns par rapport aux autres lorsque les éléments poussoirs (2) se déplacent suivant une courbe,
des surfaces de charge (16) des éléments de support (6) forment ensemble une surface de transport d'objets,
les corps d'écartement (4) d'un élément poussoir (2) présentent des surfaces (12) de transfert de poussée qui sont configurées en segments d'une surface cylindrique commune et
l'axe du cylindre coïncide avec un axe (5) et les corps d'écartement (4) tournent les uns par rapport aux autres autour de l'axe (5) lors d'un changement de direction des éléments poussoirs (2) et roulent les uns contre les autres par les surfaces (12) de transfert de poussée.
